# EUROPÄISCHE PATENTSCHRIFT

(11) **EP 4 013 980 B1**
(45) Veröffentlichungstag und Bekanntmachung des Hinweises auf die Patenterteilung: **20.03.2024**
(21) Anmeldenummer: 20754237.4
(22) Anmeldetag: 10.08.2020
(51) Int. Cl.: F16H 59/44, F16H 61/20, F16H 63/48

(54) **VERFAHREN ZUR STEUERUNG DES EIN- UND/ODER AUSLEGENS EINER PARKSPERRE EINES GETRIEBES EINES FAHRZEUGES, INSBESONDERE EINES KRAFTFAHRZEUGES**
METHOD FOR CONTROLLING THE ENGAGEMENT AND/OR DISENGAGEMENT OF A PARKING LOCK OF A TRANSMISSION OF A VEHICLE, IN PARTICULAR OF A MOTOR VEHICLE
PROCÉDÉ DE COMMANDE DE LA MISE EN PRISE ET/OU DE LA LIBÉRATION D'UN MÉCANISME DE VERROUILLAGE DE STATIONNEMENT D'UNE BOÎTE DE VITESSES D'UN VÉHICULE, EN PARTICULIER D'UN VÉHICULE AUTOMOBILE

(30) Priorität: 16.08.2019 DE 102019212319
(43) Veröffentlichungstag der Anmeldung: 22.06.2022
(73) Patentinhaber: Volkswagen Aktiengesellschaft, 38436 Wolfsburg (DE)
(72) Erfinder: SCHLEGELMILCH, Dirk, 38448 Wolfsburg (DE); MEYER, Fabian, 13587 Berlin (DE)
(86) Internationale Anmeldenummer: PCT/EP2020/072357
(87) Internationale Veröffentlichungsnummer: WO 2021/032520

(56) Entgegenhaltungen:
- DE-A1-102005 005 669
- DE-B3-102004 047 100

## Beschreibung

Die Erfindung betrifft ein Verfahren zur Steuerung des Ein- und/oder Auslegens einer Parksperre eines Getriebes eines Fahrzeuges, insbesondere eines Kraftfahrzeuges.

Im Stand der Technik sind eine Vielzahl von Verfahren zur Steuerung des Ein- und/oder Auslegens einer Parksperre eines Getriebes eines Fahrzeuges, insbesondere eines Kraftfahrzeuges bekannt.

Die entsprechenden Kraftfahrzeuge weisen im Allgemeinen dann eine Parksperre, eine Parkbremse und ein Steuergerät auf, wobei die Parksperre insbesondere mit Hilfe mindestens eines aktivierbaren Parkperrenaktuators im Getriebe, insbesondere in einem Automatikgetriebe, wirksam einlegbar oder auslegbar ist. Durch ein wirksames Einlegen der Parksperre im Getriebe ist das Fahrzeug dann gegen ein unbeabsichtiges Verrollen und/oder gegen eine unbeabsichtigte Weiterfahrt absicherbar, insbesondere wenn im Getriebe die Neutralstellung (N) eingelegt ist. Der Fahrer, der den Wunsch hat, das Fahrzeug gegen ein unbeabsichtiges Verrollen und/oder gegen eine unbeabsichtigte Weiterfahrt abzusichern, kann dann eine Vorrichtung zur Aktivierung der Parksperre manuell betätigen, insbesondere eine Parksperrentaste und/oder einen Wählhebel betätigen, insbesondere eine an einem Wählhebel vorhandene Parksperrentaste drücken/betätigen oder den Wählhebel in die entsprechende Parkposition "P" bewegen.

Weiterhin weisen entsprechende Fahrzeuge, insbesondere Kraftfahrzeuge mindestens auch eine Vorrichtung zur Aktivierung einer Parkbremse auf, insbesondere mindestens eine Parkbremsentaste, eine sogenannte "EPB-Taste". Wird die Vorrichtung zur Aktivierung einer Parkbremse, insbesondere die Parkbremsentaste (EPB-Taste) durch den Fahrer betätigt/aktiviert, wird die Parkbremse angezogen bzw. die Parkbremsenfunktion des Fahrzeugs realisiert.

Weiterhin weisen die im Stand der Technik bekannten Kraftfahrzeuge entsprechende Steuergeräte, insbesondere auch zur Steuerung des wirksamen Ein- und Auslegens der

Parksperre im Getriebe auf. Dem Steuergerät werden entsprechende Fahrparameter des Fahrzeuges zugeleitet. Insbesondere wird dem Steuergerät mindestens ein aktueller bestimmter erster Fahrparameter zugeleitet und/oder dieser wird vom Steuergerät mit Hilfe entsprechender Sensoren ermittelt und/oder berechnet. Vorzugsweise werden dem Steuergerät aber mehrere bestimmte Fahrparameter zugeleitet und/oder vom Steuergerät aktuell ermittelt und/oder berechnet, wie beispielsweise die Fahrzeuggeschwindigkeit, die Fahrzeugbeschleunigung, die Fahrbahnneigung bzw. das Fahrbahngefälle und/oder die Längsneigung des Fahrzeuges, der Beladungszustand des Fahrzeuges, die manuelle Betätigung (Aktivierung/Deaktivierung) entsprechender Tasten, die Betätigung des Fahr- und/oder Bremspedales (oder dergleichen).

In der DE 10 2004 047 100 B3 wird nun ein Verfahren zur Steuerung des Ein- und/oder Auslegens einer Parksperre im Getriebe eines Kraftfahrzeuges beschrieben, bei dem als bestimmter erster Fahrparameter die aktuelle Fahrzeuggeschwindigkeit des Fahrzeuges ermittelt wird, wobei dann, wenn der Fahrer die Vorrichtung zur Aktivierung der Parksperre betätigt und die aktuelle Fahrzeuggeschwindigkeit dann größer als null ist, dann das Fahrzeug erst weiter mit Hilfe der Parkbremse weiter abgebremst wird bevor die Parksperre im Getriebe dann wirksam eingelegt wird. Bei dem hier im Stand der Technik bereits bekannten Verfahren wird daher die Parkbremse vor dem wirksamen Einlegen der Parksperre im Getriebe verwendet bzw. von der elektronischen Steuereinheit zumindest so lange aktiviert, bis ein Unterschreiten einer Fahrzeuggeschwindigkeitsschwelle oder insbesondere der Stillstand des Fahrzeuges festgestellt ist. Anders ausgedrückt, das Fahrzeug wird mit Hilfe der Parkbremse weiter abgebremst bevor die Parksperre im Getriebe wirksam einlegt wird.

Das im Stand der Technik bekannte Verfahren bzw. das durch dieses Verfahren betriebene Kraftfahrzeug ist aber noch nicht optimal ausgebildet.

Das wirksame Einlegen einer insbesondere elektrisch angesteuerten Parksperre eines freibeweglichen bzw. rollbaren Fahrzeuges kann zu Beschädigungen des Parksperrenmechanismus führen, wenn das Fahrzeug in den Sperrmechanismus (Sperrklinke) "hineinrollt". Zusätzlich kann das Sperrelement (Sperrklinke) verspannen, was beim nächsten Lösen bzw. bei dem wirksamen Auslegen der Parksperre dann einen höheren Kraftaufwand erfordert sowie einen unkomfortablen Auslegeruck zur Folge haben kann.

Bei diesem im Stand der Technik bekannten Verfahren wird nun bevor die Parksperre im Getriebe wirksam eingelegt wird, das Fahrzeug erst weiter abgebremst, also die Fahrzeuggeschwindigkeit weiter verringert bzw. reduziert, nämlich mit Hilfe der aktivierten Parkbremse (bzw. der Feststellbremse). Nichtdestotrotz ist es möglich, dass bei dem hier beschriebenen Verfahren das Fahrzeug, sollte es auf einer geneigten Fahrbahn stehen in eine bereits wirksam eingelegte Parksperre "hineinrollt", wenn das Fahrzeug seinen Stillstand noch nicht erreicht hat, aber die hier vorgegebene Fahrzeuggeschwindigkeitsschwelle bereits unterschritten hat. Ist die Parkbremse im Getriebe wirksam eingelegt und deaktiviert zum Losfahren der Fahrer die Parkbremse manuell, kann das Fahrzeug aufgrund der Neigung einer Fahrbahn dann in die noch wirksam eingelegte Parkbremse "hineinrollen", was zu den oben bereits beschriebenen Problemen führen kann.

Weiterhin ist im Stand der Technik aus der DE 10 2005 005 669 A1 ein Verfahren zum Parken und Starten eines Kraftfahrzeuges bekannt, bei dem für das Lösen der Parksperre zumindest am Hang bzw. im Gefälle verfahrensmäßig vorgesehen wird, dass zuerst die formschlüssige Parksperre zu öffnen ist, bevor die Betriebsbremse bzw. die Feststellbremse vollständig gelöst ist, um sicherzustellen, dass es nicht zu einem "Parksperrenauslegeschlag" kommt. Letztere, also die Betriebsbremse wird dann aber im Endeffekt vollständig gelöst, wenn die Parksperre zuvor geöffnet worden ist.

Die im Stand der Technik bekannten Verfahren sind noch nicht optimal ausgebildet.

Der Erfindung liegt daher die Aufgabe zu Grunde, dass eingangs genannte Verfahren nun derart auszugestalten und weiterzubilden, dass einerseits der Fahrkomfort für den Fahrer erhöht ist und/oder andererseits die Gefahr einer Beschädigung und/oder eines Verschleißes der Parksperre verringert ist.

Die zuvor aufgezeigte Aufgabe ist für das Verfahren zunächst durch die Merkmale des Patentanspruches 1 gelöst.

Bei der bevorzugten Ausführungsform des erfindungsgemäßen Verfahrens wird nun als zweiter Fahrparameter die aktuelle Steigung der Fahrbahn und/oder die Längsneigung des Fahrzeugs ermittelt und/oder berechnet, wobei aufgrund des ermittelten Steigungswertes und/oder des ermittelten Längsneigungswertes des Fahrzeuges entschieden und/oder überprüft wird, ob eine bereits aktivierte Parkbremse vom Fahrer wieder deaktivierbar ist, insbesondere wieder manuell deaktivierbar ist.

Bei der bevorzugten Ausführungsform des Verfahrens wird daher die Parkbremse zunächst automatisch aktiviert, insbesondere um möglicherweise auch das Fahrzeug weiter bis in den Stillstand abzubremsen, bevor die Parksperre im Getriebe wirksam eingelegt wird. Erreicht das Fahrzeug dann den Stillstand bzw. ist die Fahrzeuggeschwindigkeit im Wesentlichen null wird die Parksperre im Getriebe wirksam eingelegt.

Für den Fall, dass die Parkbremse also bereits, insbesondere automatisch aktiviert ist und/oder das Fahrzeug im Stillstand ist und die Parksperre wirksam eingelegt ist und dann der Betrag des ermittelten Steigungs- und/oder Neigungswertes den Betrag eines bestimmten zweiten Neigungsgrenzwertes unterschreitet, ist ein Lösen und/oder eine Deaktivierung der Parkbremse durch den Fahrer jederzeit erlaubt und/oder ermöglicht.

Anders ist es für den Fall, dass die Parkbremse bereits, insbesondere automatisch aktiviert ist und/oder das Fahrzeug im Stillstand ist und die Parksperre wirksam eingelegt ist und der Betrag des ermittelten Steigungs- und/oder Neigungswertes den Betrag eines bestimmten zweiten Neigungsgrenzwertes überschreitet, denn dann wird ein Lösen und/oder eine Deaktivierung der Parkbremse durch den Fahrer zumindest so lange automatisch nicht erlaubt bzw. verhindert, wie die Parksperre wirksam im Getriebe eingelegt ist. Dies ist insbesondere dann vorteilhaft, wenn das Fahrzeug auf einer stark geneigten Fahrbahn steht, denn dann kann der Fahrer für den Fall die Parkbremse eben nicht deaktivieren, so dass ein Hineinrollen und/oder ein Verspannen der bereits im Getriebe eingelegten Parksperre verhindert ist.

Insbesondere ist die Parkbremse durch den Fahrer erst dann deaktivierbar, wenn die Parksperre im oder am Getriebe wirksam ausgelegt ist. Dies verhindert das Hineinrollen in die Parksperre bei einem starken Gefälle/Steigung der Fahrbahn.

Denkbar ist auch, dass, wenn ein Lösen und/oder eine Deaktivierung der Parkbremse durch den Fahrer, wie oben beschrieben, jederzeit erlaubt und/oder ermöglicht ist, nämlich wenn der Betrag des ermittelten Steigungswertes den Betrag eines bestimmten zweiten Neigungsgrenzwertes unterschreitet, dann automatisch auch die Parksperre, insbesondere kurz vorher zumindest aber gleichzeitig, gemeinsam mit der Deaktivierung der Parkbremse ebenfalls wirksam ausgelegt wird.

Weiterhin kann das erfindungsgemäße Verfahren nun dadurch ausgestaltet sein, dass eine wirksam eingelegte Parksperre automatisch ausgelegt wird, wenn der Fahrer bei einer im Getriebe kraftschlüssig wirksam eingelegten Gangstufe das Fahrpedal betätigt.

Denkbar ist auch, dass zum Abbremsen des Fahrzeuges bis in den Stillstand des Fahrzeuges, insbesondere unterhalb eines bestimmten Fahrzeuggeschwindigkeits-Grenzwertes auch das hydraulische Bremssystem aktiviert wird.

Der jeweilige bestimmte Fahrzeuggeschwindigkeits-Grenzwert unterhalb dessen insbesondere die Parkbremse automatisch aktiviert wird, um das Fahrzeug weiter abzubremsen beträgt insbesondere 3 km/h.

Der oben genannte bestimmte erste Steigungs- und/oder Neigungsgrenzwert entspricht insbesondere einer 5%-igen Fahrbahnsteigung bzw. einem entsprechenden Fahrbahngefälle und/oder der oben genannte bestimmte zweite Steigungs- und/oder Neigungsgrenzwert entspricht einer 15%-igen Fahrbahnsteigung bzw. einem entsprechenden Fahrbahngefälle. Schließlich ist denkbar, dass eine aktivierte Parkbremse bei einer Deaktivierung der Parksperre, insbesondere bei entsprechender Betätigung der Parksperrentaste, insbesondere also bei einem wirksamen Auslegen der Parksperre ebenfalls zugleich dann automatisch mit deaktiviert wird.

Die eingangs genannten Nachteile sind jedenfalls entsprechend vermieden und/oder spezifische Vorteile sind erzielt, wenn das jeweilige zuvor beschriebene Verfahren bei einem Fahrzeug, insbesondere Kraftfahrzeug realisiert wird.

Es gibt nun eine Vielzahl von Möglichkeiten, das erfindungsgemäße Verfahren, welches durch nachfolgenden Ansprüche definiert wird, in vorteilhafter Art und Weise auszugestalten und weiterzubilden. Hierfür darf zunächst auf die dem Patentanspruch 1 nachgeordneten Patentansprüche verwiesen werden. Im Folgenden darf eine bevorzugte Ausführungsform der Erfindung anhand der Zeichnung und der dazugehörigen Beschreibung näher erläutert werden. In der Zeichnung zeigt:
Fig. 1 in schematischer Darstellung die wesentlichen Komponenten zur Durchführung des erfindungsgemäßen Verfahrens für ein Fahrzeug, insbesondere für ein Kraftfahrzeug, und
Fig. 2 in schematischer Darstellung ein Schaltbild zur Durchführung des erfindungsgemäßen Verfahrens, wobei die erfindungsgemäßen Verfahrensschritte speziell in Pfad II dargestellt sind.

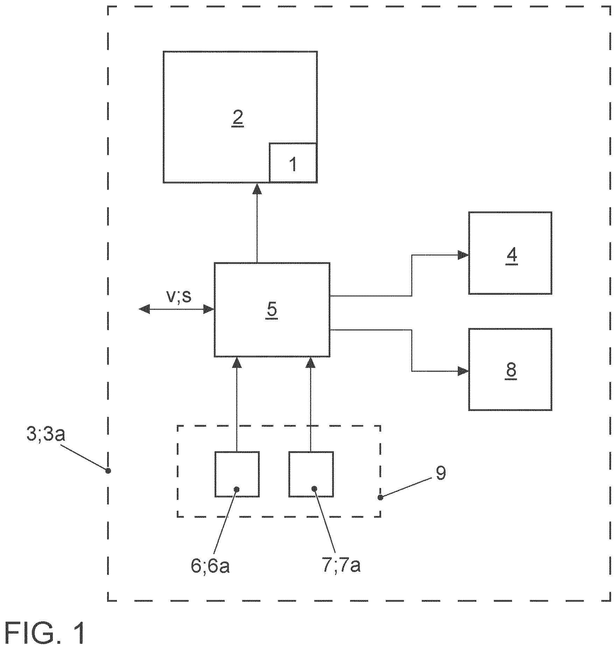

Die Fig. 1 zeigt zunächst die wesentlichen Komponenten zur Realisierung des Verfahrens zur Steuerung des Ein- und/oder Auslegens einer Parksperre 1 eines Getriebes 2 eines durch eine gestrichelte Linie nur angedeuteten Fahrzeuges 3, insbesondere eines Kraftfahrzeuges 3a.

Das Fahrzeug 3 bzw. das Kraftfahrzeug 3a weist die Parksperre 1 und das Getriebe 2 auf. Insbesondere ist die Parksperre 1 zumindest teilweise innerhalb des Getriebes 2 angeordnet. Weiterhin weist das Fahrzeug 3 bzw. das Kraftfahrzeug 3a eine Parkbremse 4 und ein Steuergerät 5 auf. Die Parksperre 1 ist mit Hilfe mindestens eines aktivierbaren, hier nicht näher dargestellten Parksperrenaktuators im Getriebe 2, insbesondere hier in einem Automatikgetriebe 2a, wirksam einlegbar oder auslegbar, insbesondere wenn sich das Getriebe 2 in der Neutralstellung "N" befindet. Hierbei ist die Parksperre 1 im und/oder am Getriebe 2 wirksam einlegbar, insbesondere bedeutet dies, dass die Parksperre 1 und/oder die hierfür notwendigen mechanischen Komponenten zumindest teilweise im und/oder am Getriebe 2 bzw. im Bereich des Getriebes 2 entsprechend angeordnet ist bzw. sind.

Zur Ermittlung eines Fahrerwunsches, nämlich des Fahrerwunsches, dass das Fahrzeug 3 gegen ein unbeabsichtigtes Verrollen und/oder gegen eine unbeabsichtigte Weiterfahrt zu sichern ist, weist das Fahrzeug 3 mindestens eine Vorrichtung 6 zur Aktivierung der Parksperre 1, insbesondere eine Parksperrentaste 6a und/oder eine bestimmte Positionierungsmöglichkeit für einen nicht dargestellten Wählhebel (Position "P") auf, sowie mindestens eine Vorrichtung 7 zur Aktivierung der Parkbremse 4, insbesondere mindestens eine Parkbremsentaste 7a (EPB-Taste). Die Vorrichtung 6, insbesondere die Parksperrentaste 6a und/oder die Vorrichtung 7, insbesondere die Parkbremsentaste 7a können vom Fahrer, insbesondere im Fahrgastraum manuell betätigt werden, insbesondere gedrückt werden.

Mit Hilfe des Steuergerätes 5 wird die Steuerung des wirksamen Ein- und Auslegens der Parksperre 1 im Getriebe 2 gesteuert, insbesondere automatisch gesteuert. Hierbei werden dem Steuergerät 5 insbesondere mehrere Fahrparameter zugeleitet und/oder vom Steuergerät 5 mehrere Fahrparameter (v,s) aktuell ermittelt. Zumindest wird mindestens ein aktueller bestimmter Fahrparameter (v) dem Steuergerät zugeleitet und/oder vom Steuergerät 5 ermittelt, wobei als bestimmter erster Fahrparameter die aktuelle Fahrzeuggeschwindigkeit v des Fahrzeugs ermittelt wird. Die Fahrzeuggeschwindigkeit v wird vom Steuergerät 5, insbesondere permanent/kontinuierlich ermittelt, zumindest aber dann wenn der Fahrer das Fahrzeug 3 gegen ein Verrollen und/oder gegen eine Weiterfahrt absichern möchte, nämlich zumindest dann wird die Fahrzeuggeschwindigkeit v ermittelt, wenn der Fahrer die Vorrichtung 6, insbesondere die Parksperrentaste 6a zur Aktivierung der Parksperre 1 betätigt hat, also die Parksperre 1 im Getriebe 2 einlegen möchte.

Die Parksperre 1 wird im und/oder am Getriebe 2 aber erst wirksam eingelegt, wenn das Fahrzeug 3 im Stillstand ist und/oder die aktuelle Fahrzeuggeschwindigkeit v im Wesentlichen null beträgt. Dies gilt im Wesentlichen für alle bevorzugten Ausführungsformen des Verfahrens, hierauf darf hingewiesen werden. Mit dem Ausdruck "im wesentlichen null" beträgt, ist gemeint, dass auch ganz geringe Fahrzeuggeschwindigkeiten wie beispielsweise kleiner gleich 0,05 km/h und/oder entsprechende Messungenauigkeiten in diesem Bereich mit dem Begriff "im wesentlich null" noch mit umfasst sein sollen bzw. werden.

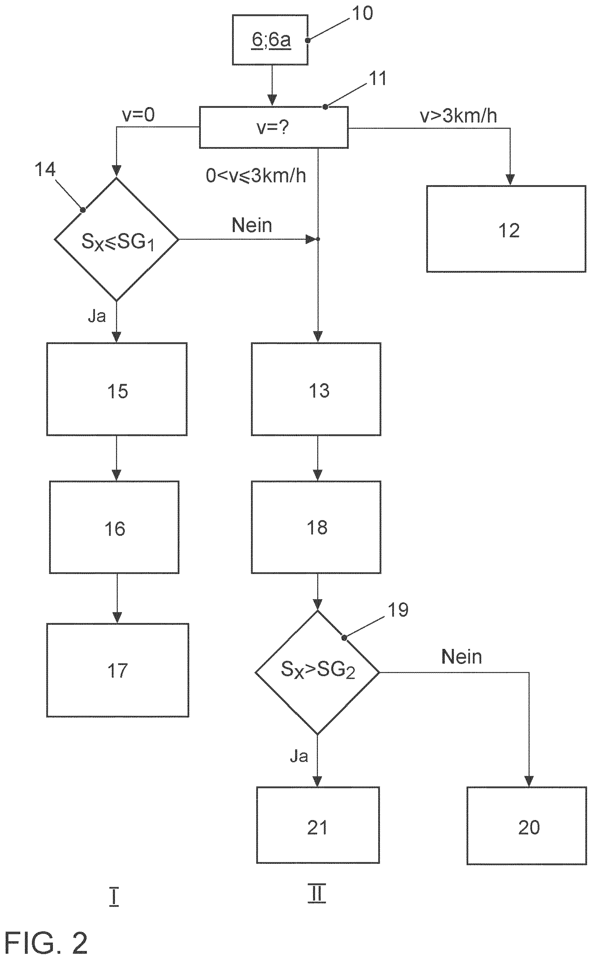

Im Folgenden werden nun zunächst die Verfahrensschritte des Verfahrens geschildert. Hierbei sind mögliche Verfahrensschritte im Wesentlichen durch den Pfad I in Fig. 2 links dargestellt und die erfindungsgemäßen Verfahrensschritte durch den Pfad II in Fig.2 rechts dargestellt, wobei diese Verfahrensschritte miteinander entsprechend kombiniert werden können.

Den jeweiligen Verfahrensschritten ist aber im Wesentlichen zunächst auch gemeinsam, dass - wie die Fig. 2 zeigt - der Fahrer zunächst die Vorrichtung 6, insbesondere die Parksperrentaste 6a, zu Beginn des Verfahrens hier durch das Bezugszeichen "10" dargestellt, betätigt, weil er das Fahrzeug 3 gegen ein Verrollen und/oder gegen eine Weiterfahrt absichern möchte, insbesondere also weil er die Parksperre 1 im Getriebe 2 wirksam einlegen möchte (in Fig. 2 ganz oben dargestellt).

In einem ersten Verfahrensschritt 11 wird dann die aktuelle Fahrzeuggeschwindigkeit v ermittelt und/oder die aktuelle Fahrzeuggeschwindigkeit v überprüft. Die Parksperre 1 wird im und/oder am Getriebe 2 aber erst wirksam eingelegt, dies ist wiederum im wesentlichen allen Verfahren gemeinsam, wenn das Fahrzeug 3 im Stillstand ist und/oder die aktuelle Fahrzeuggeschwindigkeit v im Wesentlichen null beträgt. Hat das Fahrzeug 3 seinen Stillstand noch nicht erreicht bzw. überschreitet die aktuelle Fahrzeuggeschwindigkeit v einen bestimmten Fahrzeuggeschwindigkeits-Grenzwert, insbesondere ist die Fahrzeuggeschwindigkeit v größer als 3 km/h, wird das wirksame Einlegen der Parksperre 1 im und/oder am Getriebe 2 mit Hilfe des Steuergerätes 5 automatisch verhindert, obwohl der Fahrer die Vorrichtung 6, insbesondere die Parksperrentaste 6a bereits betätigt hat. Dies ist in Fig. 2 durch den dortigen Verfahrensschritt 12 dargestellt. Es erfolgt kein wirksames Einlegen der Parksperre 1. Wenn das Fahrzeug 3 seinen Stillstand noch nicht erreicht hat und die aktuelle Fahrzeuggeschwindigkeit v einen bestimmten Fahrzeuggeschwindigkeits-Grenzwert, insbesondere von 3 km/h, unterschreitet, dann kann das Fahrzeug 3 erst weiter mit Hilfe der dann automatisch aktivierten Parkbremse 4 bis in den Stillstand und/oder bis seine Fahrzeuggeschwindigkeit v im Wesentlichen null erreicht hat, abgebremst werden (letzteres ist insbesondere zu Beginn des Pfades II in Fig. 2 Mitte durch den Verfahrensschritt 13 dargestellt. Insbesondere wird das Fahrzeug 3 dann, wenn die Fahrzeuggeschwindigkeit v kleiner gleich 3 km/h ist, durch die dann automatisch aktivierte Parkbremse 4 weiter abgebremst). Oder letzteres, nochmal anders ausgedrückt, erst wenn das Fahrzeug 3 mit seiner Fahrzeuggeschwindigkeit v den bestimmten Fahrzeuggeschwindigkeits-Grenzwert erreicht oder diesen unterschreitet, insbesondere 3 km/h erreicht oder unterschreitet, kann das Fahrzeug 3 dann mit Hilfe einer automatisch aktivierten Parkbremse 4 bis in den Stillstand und/oder bis die Fahrzeuggeschwindigkeit v im Wesentlichen Null ist, abgebremst werden, dargestellt durch den Verfahrensschritt 13.

### Im Folgenden dürfen nun die jeweiligen Verfahrensschritte näher beschrieben werden:

Als zweiter Fahrparameter wird die aktuelle Steigung s der Fahrbahn und/oder die Längsneigung des Fahrzeugs 3 ermittelt und/oder berechnet wird, und dass aufgrund des ermittelten, insbesondere aktuellen Steigungswertes Sₓ und/oder des ermittelten Längsneigungswertes des Fahrzeuges 3 entschieden und/oder überprüft wird, ob ein hydraulisches Bremssystem 8 des Fahrzeugs 3 aktiviert wird. Dieser Verfahrensschritt ist in Fig. 2 links, nämlich hier im Pfad I dargestellt. Für den Fall, dass die Fahrzeuggeschwindigkeit v im Wesentlichen null ist und/oder das Fahrzeug 3 im Stillstand ist und der Betrag des ermittelten Steigungs- und/oder Neigungswertes Sₓ den Betrag eines bestimmten ersten Neigungsgrenzwertes SG₁ unterschreitet oder diesem Betrag entspricht, wird das hydraulische Bremssystem 8, insbesondere für maximal 2 Sekunden automatisch aktiviert. Hierdurch wird das Fahrzeug 3 im Stillstand gegen ein Verrollen durch das hydraulische Bremssystems 8 dann gesichert bzw. "festgebremst". Nach dieser Sicherung bzw. nach der Aktivierung des hydraulischen Bremssystems 8 wird die Parksperre 1 im und/oder am Getriebe 2 dann automatisch wirksam eingelegt. Nach dem wirksamen Einlegen der Parksperre 1 wird das hydraulische Bremssystem 8 wieder automatisch deaktiviert, insbesondere nach den bereits oben erwähnten 2 Sekunden. Insbesondere wird dann auch keine Parkbremse 4 zur weiteren Sicherung des Fahrzeugs 3 gegen ein Verrollen automatisch aktiviert, denn das Fahrzeug 3 ist insbesondere über die wirksam eingelegte Parksperre 1 gegen ein Verrollen gesichert. Die zuvor genannten Verfahrensschritte sind insbesondere durch den Pfad I in Fig. 2 links schematisch dargestellt. Im Verfahrensschritt 14 wird daher überprüft, ob der ermittelte Steigungs- und/oder Neigungswert S_{X} kleiner oder gleich dem Betrag des bestimmten ersten Neigungsgrenzwertes SG₁ ist. Für den Fall dass diese Bedingung erfüllt ist, wird dann im Verfahrensschritt 15 das hydraulische Bremssystem 8 automatisch aktiviert. Danach wird die Parksperre 1 im oder am Getriebe 2 dann automatisch wirksam im Verfahrensschritt 16 eingelegt. Nach dem wirksamen Einlegen der Parksperre 1 wird das hydraulische Bremssystem 8 im Verfahrensschritt 17 wieder automatisch deaktiviert. Das hydraulische Bremssystem 8 wird daher insbesondere aktiviert, wenn der Betrag des ermittelten Steigungs- und/oder Neigungswertes Sₓ kleiner oder gleich dem Betrag des bestimmten ersten Neigungsgrenzwertes SG₁ ist.

Bevor die erfindungsgemäße Ausführungsform näher beschrieben werden darf, darf bereits an dieser Stelle darauf hingewiesen werden, dass für den Fall, dass die Fahrzeuggeschwindigkeit v im Wesentlichen null ist und/oder das Fahrzeug 3 im Stillstand ist und der Betrag des ermittelten Steigungs- und/oder Neigungswertes Sₓ den Betrag des bestimmten ersten Neigungsgrenzwertes SG₁ überschreitet, dann die Parkbremse 4 automatisch aktiviert wird, insbesondere also das hydraulische Bremssystem 8 nicht automatisch aktiviert wird und dann die in Fig. 2 dargestellte Verzweigung von Pfad I zum Pfad II stattfindet. Anders ausgedrückt, ist der Betrag des ermittelten Steigungs- und/oder Neigungswertes S_{X} größer als der Betrag des bestimmten ersten Neigungsgrenzwertes SG₁ wird das hydraulische Bremssystem 8 nicht aktiviert und die Parkbremse 4 kann aktiviert werden. Der Verfahrensschritt 13 kann dann durchgeführt werden.

### Im Folgenden darf nun die erfindungsgemäße Ausführungsform des Verfahrens näher beschrieben werden:

Bei dem erfindungsgemäßen Verfahren wird zunächst ebenfalls die Vorrichtung 6 bzw. die Parksperrentaste 6a durch den Fahrer betätigt (vgl. Schritt 10), wobei die Parksperre 1 im Getriebe 2 dann noch nicht wirksam eingelegt ist. Es wird zunächst die Fahrzeuggeschwindigkeit v ermittelt (vgl. Verfahrensschritt 11). Überschreitet die Fahrzeuggeschwindigkeit v einen bestimmten Fahrzeuggeschwindigkeits-Grenzwert, ist insbesondere größer als 3 km/h, ist das wirksame Einlegen der Parksperre 1 im Getriebe 2 automatisch verhindert (vgl. Verfahrensschritt 12). Unterschreitet die Fahrzeuggeschwindigkeit v den bestimmten Fahrzeuggeschwindigkeits-Grenzwert, ist insbesondere kleiner als 3 km/h, wobei das Fahrzeug 3 aber noch nicht im Stillstand ist, so wird die Parkbremse 4 automatisch aktiviert, um das Fahrzeug 3 weiter abzubremsen. Dies ist insbesondere dargestellt in Pfad II der Fig. 2 (vgl. Verfahrensschritt 13). Erreicht das Fahrzeug 3 den Stillstand bzw. beträgt die Fahrzeuggeschwindigkeit v im Wesentlichen dann null, wird die Parksperre 1 im Getriebe 2 dann automatisch wirksam eingelegt. Dies soll durch den Verfahrensschritt 18 dargestellt sein.

Die eingangs genannten Nachteile sind nun bei der erfindungsgemäßen Ausführungsform des Verfahrens dadurch vermieden, dass als zweiter Fahrparameter die aktuelle Steigung s der Fahrbahn und/oder die Längsneigung des Fahrzeuges 3 ermittelt und/oder berechnet wird und dass aufgrund des ermittelten Steigungswertes Sₓ und/oder des ermittelten Längsneigungswertes des Fahrzeuges 3 entschieden und/oder überprüft wird, ob eine bereits aktivierte Parkbremse 4 vom Fahrer wieder deaktivierbar ist. Insbesondere bei größeren Steigungen und/oder einem größeren Fahrbahngefälle hat dies besondere Vorteile, die im Folgenden näher erläutert werden dürfen.

Für den Fall, dass die Parkbremse 4 bereits, insbesondere automatisch aktiviert und/oder das Fahrzeug 3 im Stillstand ist und die Parksperre 1 wirksam im Getriebe 2 eingelegt ist und der Betrag des ermittelten Steigungs- und/oder Neigungswertes Sₓ den Betrag eines bestimmten zweiten Neigungsgrenzwertes SG₂ unterschreitet oder diesem Betrag entspricht, ist ein Lösen und/oder eine Deaktivierung der Parkbremse 4, insbesondere durch die Betätigung der Vorrichtung 7, insbesondere der Parkbremsentaste 7a, durch den Fahrer jederzeit erlaubt und/oder ermöglicht. Dies ist in Fig.2 unten rechts grafisch dargestellt, wo dann der Betrag des ermittelten aktuellen Steigungs- und/oder Neigungswertes Sₓ eben nicht größer ist, als der zweite Neigungsgrenzwert SG₂, also die hier dargestellte Abfrage verneint wird, so dass dann das Lösen der Parkbremse 4 durch den Fahrer mit Hilfe des Steuergerätes 5 erlaubt wird, wenn der Fahrer die Vorrichtung 7, insbesondere die Parkbremsentaste 7a entsprechend betätigt. Im Verfahrensschritt 19 wird daher überprüft, ob der ermittelte Steigungs- und/oder Neigungswert S_{X} größer ist als der zweite Neigungsgrenzwert SG₂. Wird diese Überprüfung / Abfrage verneint, so wird der Verfahrensschritt 20 durchgeführt und ein Lösen der Parkbremse 4 durch den Fahrer wird mit Hilfe des Steuergerätes 5 erlaubt, insbesondere wenn der Fahrer die Vorrichtung 7 bzw. die Parkbremsentaste 7a entsprechend betätigt, insbesondere ist die Parkbremse 4 damit dann entsprechend deaktivierbar. Nochmal anders ausgedrückt, ist der Betrag des ermittelten Steigungs- und/oder Neigungswertes S_{X} kleiner oder gleich dem Betrag des bestimmten zweiten Neigungsgrenzwertes SG₂ ist das Lösen oder die Deaktivierung der Parkbremse 4 durch den Fahrer, insbesondere über die Betätigung der Parkbremsentaste 7a, jederzeit erlaubt und/oder mit Hilfe des Steuergerätes 5 ermöglicht.

Für den Fall, dass die Parkbremse 4, insbesondere automatisch aktiviert ist und/oder das Fahrzeug 3 im Stillstand ist und die Parksperre 1 wirksam eingelegt ist und der Betrag des ermittelten Steigungs- und/oder Neigungswertes Sₓ den Betrag eines bestimmten zweiten Neigungsgrenzwertes SG₂ überschreitet, wird ein Lösen und/oder eine Deaktivierung der Parkbremse 4 durch den Fahrer zumindest solange automatisch nicht erlaubt und/oder automatisch verhindert, wie die Parksperre 1 wirksam im Getriebe 2 eingelegt ist, dies ist in Fig. 2 im Pfad II ganz unten (Mitte) grafisch dargestellt bzw. soll durch den Verfahrensschritt 21 dargestellt sein.

Dies hat zur Folge, dass wenn die Steigung der Fahrbahn bzw. die Längsneigung des Fahrzeugs 3 entsprechend stark ist, dann der Fahrer die Parkbremse 4 eben nicht, insbesondere nicht manuell deaktivieren kann bevor nicht auch die Parksperre 1 im Getriebe 2 wirksam ausgelegt ist. So ist das Hineinrollen in eine wirksam eingelegte Parksperre 1 verhindert.

Grundsätzlich ist auch denkbar, dass die Parkbremse 4 durch den Fahrer erst dann deaktivierbar ist, wenn die Parksperre 1 im und/oder am Getriebe 2 wirksam ausgelegt ist. Denkbar ist, dass bei der Deaktivierung der Parkbremse 4 durch den Fahrer automatisch auch die Parksperre 1, insbesondere kurz vorher zumindest aber gleichzeitig ebenfalls wirksam im Getriebe 2 ausgelegt wird, insbesondere um das Hineinrollen in eine wirksame eingelegte Parksperre 1 zu verhindern. Hierfür könnte dann ein gemeinsames Tastenelement 9 vorgesehen sein.

Die in Pfad I und in Pfad II jeweils dargestellten Schritte können gemeinsam realisiert werden. Dies zeigt insbesondere die zwischen dem Pfad I und dem Pfad II in Fig. 2 oben links dargestellte Verzweigung, nämlich dass von Pfad I in den Pfad II "gesprungen" werden kann, wenn der Betrag des ermittelten Steigungswertes Sₓ größer ist, als der erste bestimmte Neigungsgrenzwert SG₁. Die erfindungsgemäßen Verfahrensschritte sind jedoch speziell durch den Pfad II in Fig. 2 dargestellt.

Ganz allgemein kann eine wirksam eingelegte Parksperre 1 automatisch ausgelegt werden, wenn der Fahrer bei einer im Getriebe 2 kraftschlüssig wirksam eingelegten Gangstufe das Fahrpedal betätigt. Denkbar ist auch, dass zum Abbremsen des Fahrzeuges 3 bis zum Stillstand des Fahrzeuges 3, insbesondere wenn die Fahrzeuggeschwindigkeit v geringer ist als der bestimmte Fahrzeuggeschwindigkeits-Grenzwert, insbesondere also geringer ist als 3 km/h, das hydraulische Bremssystem 8 hierfür aktiviert wird.

Wie bereits oben erwähnt, beträgt der bestimmte Fahrzeuggeschwindigkeits-Grenzwert insbesondere 3 km/h. Denkbar sind noch andere Werte, die insbesondere zwischen den Werten 2 bis 5 km/h liegen.

Vorzugsweise entspricht der bestimmte erste Steigungs- und/oder Neigungsgrenzwert SG₁ einer 5%-igen Fahrbahnsteigung bzw. einem entsprechen Fahrbahngefälle und/oder der bestimmte zweite Steigungs- und/oder Neigungsgrenzwert SG₂ einer 15%-igen Fahrbahnsteigung bzw. einem entsprechen Fahrbahngefälle.

Denkbar ist auch, dass mit Hilfe des Steuergerätes 5 eine bereits aktivierte Parkbremse 4 bei einer Deaktivierung der Parksperre 1 durch den Fahrer, insbesondere bei entsprechender Betätigung der Parksperrentaste 6a, insbesondere also bei einem wirksamen Auslegen der Parksperre 1 ebenfalls zugleich automatisch mit deaktiviert wird. Auch hierauf darf hingewiesen werden.

Denkbar ist, hierauf darf hingewiesen werden, dass die Vorrichtungen 6 und 7, die Tasten 6a und 7a, als "Software-Buttons" ausgeführt sind und/oder sogar eine entsprechende Sprachsteuerung durch den Fahrer realisiert ist.

### Bezugszeichenliste

- 1: Parksperre
- 2: Getriebe
- 2a: Automatikgetriebe
- 3: Fahrzeug
- 3a: Kraftfahrzeug
- 4: Parkbremse
- 5: Steuergerät
- 6: Vorrichtung zur Aktivierung der Parksperre
- 6a: Parksperrentaste
- 7: Vorrichtung zur Aktivierung der Parkbremse
- 7a: Parkbremsentaste
- 8: hydraulisches Bremssystem
- 9: Tastenelement

- v: Fahrzeuggeschwindigkeit
- s: Steigung / Gefälle der Fahrbahn bzw. Längsneigung des Fahrzeuges
- SG₁: erster Neigungsgrenzwert
- SG₂: zweiter Neigungsgrenzwert
- Sₓ: ermittelter Steigungs- bzw. Neigungswert

- 10: grundsätzlicher Beginn des Verfahrens
- 11: erster Verfahrensschritt
- 12: Verfahrensschritt
- 13: Verfahrensschritt
- 14: Verfahrensschritt
- 15: Verfahrensschritt
- 16: Verfahrensschritt
- 17: Verfahrensschritt
- 18: Verfahrensschritt
- 19: Verfahrensschritt
- 20: Verfahrensschritt
- 21: Verfahrensschritt

## Patentansprüche

1. Verfahren zur Steuerung des Ein- und/oder Auslegens einer Parksperre (1) eines Getriebes (2) eines Fahrzeuges (3), insbesondere eines Kraftfahrzeuges (3a), wobei das Fahrzeug (3) die Parksperre (1), eine Parkbremse (4) und ein Steuergerät (5) aufweist, wobei die Parksperre (1) im oder am Getriebe (2), insbesondere in einem Automatikgetriebe (2a), wirksam einlegbar oder auslegbar ist, wobei zur Ermittlung eines Fahrerwunsches, nämlich das Fahrzeug (3) gegen ein Verrollen und/oder gegen eine Weiterfahrt abzusichern, das Fahrzeug (3) mindestens eine Vorrichtung (6) zur Aktivierung der Parksperre (1), insbesondere eine Parksperrentaste (6a) und/oder eine bestimmte Positionierungsmöglichkeit für einen Wählhebel (P), und mindestens eine Vorrichtung (7) zur Aktivierung der Parkbremse (4), insbesondere mindestens eine Parkbremsentaste (7a) (EPB-Taste), aufweist, wobei mit Hilfe des Steuergerätes (5) die Steuerung des wirksamen Ein- und Auslegens der Parksperre (1) im oder am Getriebe (2) gesteuert wird, wobei dem Steuergerät (5) mindestens ein aktueller bestimmter erster Fahrparameter (v) zugeleitet und/oder vom Steuergerät (5) ermittelt wird, insbesondere aber das Steuergerät (5) mehrere bestimmte Fahrparameter aktuell ermittelt, wobei als bestimmter erster Fahrparameter zumindest die aktuelle Fahrzeuggeschwindigkeit (v) des Fahrzeugs (3) ermittelt und/oder berechnet wird, wenn der Fahrer die Vorrichtung (6) zur Aktivierung der Parksperre (1) betätigt hat, wobei aber die Parksperre (1) im oder am Getriebe (2) erst wirksam eingelegt wird, wenn das Fahrzeug (3) im Stillstand ist oder die aktuelle Fahrgeschwindigkeit (v) im wesentlichen Null beträgt, wobei ferner als zweiter Fahrparameter die aktuelle Steigung (s) der Fahrbahn und/oder die Längsneigung des Fahrzeugs ermittelt und/oder berechnet wird und für den Fall, dass die Fahrzeuggeschwindigkeit (v) im Wesentlichen Null ist oder das Fahrzeug (3) im Stillstand ist und der Betrag des zweiten Fahrparameters den Betrag eines bestimmten ersten Neigungsgrenzwertes (SG₁) überschreitet, dann die Parkbremse (4) automatisch aktiviert wird, wobei wenn das Fahrzeug (3) seinen Stillstand aber noch nicht erreicht hat und die aktuelle Fahrzeuggeschwindigkeit (v) einen bestimmten Fahrzeuggeschwindigkeits-Grenzwert überschreitet das wirksame Einlegen der Parksperre (1) im oder am Getriebe (2) verhindert wird, wobei wenn das Fahrzeug (3) seinen Stillstand noch nicht erreicht hat und die aktuelle Fahrzeuggeschwindigkeit (v) den bestimmten Fahrzeuggeschwindigkeits-Grenzwert unterschreitet, dann das Fahrzeug (3) erst weiter mit Hilfe der dann automatisch aktivierten Parkbremse (4) bis in den Stillstand oder bis seine Fahrgeschwindigkeit (v) im wesentlichen Null erreicht hat, abgebremst wird und die Parksperre (1) im oder am Getriebe (2) dann wirksam eingelegt wird, wobei dann aufgrund des ermittelten Steigungswertes (Sₓ) und/oder des ermittelten Längsneigungswertes des Fahrzeuges (3) im Hinblick auf einen bestimmten zweiten Neigungsgrenzwert (SG₂) entschieden und/oder überprüft wird, ob die bereits aktivierte Parkbremse (4) vom Fahrer wieder deaktivierbar ist.

2. Verfahren nach Anspruch 1, **dadurch gekennzeichnet, dass** für den Fall, dass das Fahrzeug im Stillstand ist und die Parksperre (1) wirksam eingelegt ist und der Betrag des ermittelten Steigungs- und/oder Neigungswertes (Sₓ) den Betrag des bestimmten zweiten Neigungsgrenzwertes (SG₂) unterschreitet oder diesem Betrag entspricht, ein Lösen und/oder eine Deaktivierung der Parkbremse (4) durch den Fahrer jederzeit erlaubt und/oder ermöglicht ist.

3. Verfahren nach Anspruch 1 oder 2, **dadurch gekennzeichnet, dass** für den Fall, dass das Fahrzeug (3) im Stillstand ist und die Parksperre (1) wirksam eingelegt ist und der Betrag des ermittelten Steigungs- und/oder Neigungswertes (Sₓ) der Betrag des bestimmten zweiten Neigungsgrenzwertes (SG₂) überschreitet, ein Lösen und/oder eine Deaktivierung der Parkbremse (4) durch den Fahrer zumindest solange automatisch nicht erlaubt und/oder automatisch verhindert ist, wie die Parksperre (1) wirksam eingelegt ist.

4. Verfahren nach Anspruch 3, **dadurch gekennzeichnet, dass** die Parkbremse (4) durch den Fahrer erst deaktivierbar ist, wenn die Parksperre (1) im oder am Getriebe (2) wirksam ausgelegt ist.

5. Verfahren nach Anspruch 2, **dadurch gekennzeichnet, dass** bei der Deaktivierung der Parkbremse (4) durch den Fahrer automatisch auch die Parksperre (1) , insbesondere kurz vorher zumindest aber gleichzeitig ebenfalls wirksam ausgelegt wird.

6. Verfahren nach einem der Ansprüche 1 bis 5, **dadurch gekennzeichnet, dass** eine wirksam eingelegte Parksperre (1) automatisch ausgelegt wird, wenn der Fahrer bei einer im Getriebe (2) kraftschlüssig wirksam eingelegten Gangstufe das Fahrpedal betätigt.

7. Verfahren nach einem der vorstehenden Ansprüche, **dadurch gekennzeichnet, dass** der entsprechende bestimmte Fahrzeuggeschwindigkeits-Grenzwert 3 km/h beträgt.

8. Verfahren nach einem der vorstehenden Ansprüche, **dadurch gekennzeichnet, dass** der bestimmte erste Steigungs- und/oder Neigungsgrenzwert (SG₁) einer 5%-tigem Fahrbahnsteigung bzw. einem entsprechenden Fahrbahngefälle und/oder der bestimmte zweite Steigungs- und/oder Neigungsgrenzwert (SG₂) einer 15%-tigem Fahrbahnsteigung bzw. einem entsprechenden Fahrbahngefälle entspricht.

9. Verfahren nach einem der vorstehenden Ansprüche, **dadurch gekennzeichnet, dass** eine aktivierte Parkbremse (4) bei einer Deaktivierung der Parksperre (1), insbesondere bei entsprechender Betätigung der Parksperrentaste (6a), insbesondere also bei einem wirksamen Auslegen der Parksperre (1) ebenfalls zugleich dann automatisch deaktiviert wird.

## Claims

1. Method for controlling the engagement and/or disengagement of a parking lock (1) of a transmission (2) of a vehicle (3), in particular of a motor vehicle (3a), wherein the vehicle (3) has the parking lock (1), a parking brake (4) and a control unit (5), wherein the parking lock (1) can be actively engaged or disengaged in or on the transmission (2), in particular in an automatic transmission (2a), wherein, for ascertaining a driver demand, specifically to secure the vehicle (3) against rolling away and/or against onward travel, the vehicle (3) has at least one device (6) for activating the parking lock (1), in particular a parking lock button (6a) and/or a particular positioning capability for a selector lever (P), and at least one device (7) for activating the parking brake (4), in particular at least one parking brake button (7a) (EPB button), wherein the control of the active engagement and disengagement of the parking lock (1) in or on the transmission (2) is controlled by means of the control unit (5), wherein at least one present determined first driving parameter (v) is transmitted to the control unit (5) and/or is ascertained by the control unit (5), but in particular the control unit (5) ascertains present multiple determined driving parameters, wherein, as a determined first driving parameter, at least the present vehicle speed (v) of the vehicle (3) is ascertained and/or calculated when the driver has actuated the device (6) for activating the parking lock (1), wherein, however, the parking lock (1) is actively engaged in or on the transmission (2) only when the vehicle (3) is at a standstill or the present driving speed (v) is substantially zero, wherein furthermore, as the second driving parameter, the present gradient (s) of the roadway and/or the longitudinal inclination of the vehicle is ascertained and/or calculated and in the case where the vehicle speed (v) is substantially zero or the vehicle (3) is at a standstill and the magnitude of the second driving parameter exceeds the magnitude of a determined first inclination limit value (SG₁), the parking brake (4) is then automatically activated, wherein, if the vehicle (3) has, however, not yet reached its standstill and the present vehicle speed (v) exceeds a determined vehicle speed limit value, the active engagement of the parking lock (1) in or on the transmission (2) is prevented, wherein, if the vehicle (3) has not yet reached its standstill and the present vehicle speed (v) falls below the determined vehicle speed limit value, the vehicle (3) then initially continues to be braked by means of the then automatically activated parking brake (4) until it has reached a standstill or until its driving speed (v) has reached substantially zero, and the parking lock (1) is then actively engaged in or on the transmission (2), wherein then a decision and/or check is made, on the basis of the ascertained gradient value (Sₓ) and/or the ascertained longitudinal inclination value of the vehicle (3) in respect of a determined second inclination limit value (SG₂), as to whether the already activated parking brake (4) can be deactivated again by the driver.

2. Method according to Claim 1, **characterized in that**, in the case where the vehicle is at a standstill and the parking lock (1) is actively engaged and the magnitude of the ascertained gradient and/or inclination value (S_{X}) falls below the magnitude of the determined second inclination limit value (SG₂) or corresponds to this magnitude, the driver is allowed and/or is able to release and/or deactivate the parking brake (4) at any time.

3. Method according to Claim 1 or 2, **characterized in that**, in the case where the vehicle (3) is at a standstill and the parking lock (1) is actively engaged and the magnitude of the ascertained gradient and/or inclination value (Sₓ) exceeds the magnitude of the determined second inclination limit value (SG₂), the driver is automatically not allowed and/or automatically prevented from releasing and/or deactivating the parking brake (4) at least for as long as the parking brake (1) is actively engaged.

4. Method according to Claim 3, **characterized in that** the parking brake (4) can be deactivated by the driver only when the parking brake (1) in or on the transmission (2) is actively disengaged.

5. Method according to Claim 2, **characterized in that**, when the parking brake (4) is deactivated by the driver, the parking lock (1) is automatically also likewise actively disengaged, in particular shortly beforehand but at least at the same time.

6. Method according to any of Claims 1 to 5, **characterized in that** an actively engaged parking lock (1) is automatically disengaged when the driver actuates the accelerator pedal when a gear stage is non-positively actively engaged in the transmission (2).

7. Method according to any of the preceding claims, **characterized in that** the corresponding determined vehicle speed limit value is 3 km/h.

8. Method according to one of the preceding claims, **characterized in that** the determined first gradient and/or inclination limit value (SG₁) corresponds to a 5% upward roadway slope or a corresponding downward roadway slope and/or the determined second gradient and/or inclination limit value (SG₂) of a 15% upward roadway slope or a corresponding downward roadway slope.

9. Method according to any of the preceding claims, **characterized in that**, when the parking lock (1) is deactivated, in particular when the parking lock button (6a) is correspondingly actuated, that is to say in particular when the parking lock (1) is actively disengaged, an activated parking brake (4) is then automatically deactivated likewise at the same time.

## Revendications

1. Procédé de commande de l'engagement et/ou du désengagement d'un bloqueur de stationnement (1) d'une transmission (2) d'un véhicule (3), notamment d'un véhicule automobile (3a), le véhicule (3) comportant un bloqueur de stationnement (1), un frein de stationnement (4) et une unité de commande (5), le bloqueur de stationnement (1) pouvant être engagé ou désengagé de manière efficace dans ou sur la transmission (2), en particulier dans une transmission automatique (2a), afin de déterminer un souhait du conducteur, à savoir empêcher de manière sécurisée le véhicule (3) de rouler et/ou de continuer à se déplacer, le véhicule (3) comportant au moins un dispositif (6) d'activation du bloqueur de stationnement (1), en particulier un bouton de blocage de stationnement (6a) et/ou comportant une possibilité de positionnement déterminée d'un levier de sélection (P), et au moins un dispositif (7) d'activation du frein de stationnement (4), notamment au moins un bouton de frein de stationnement (7a) (bouton EPE), l'unité de commande (5) permettant de commander l'engagement et le désengagement efficaces du bloqueur de stationnement (1) dans ou sur la transmission (2), au moins un premier paramètre de roulement déterminé actuel (v) étant fourni à l'unité de commande (5) et/ou étant déterminé par l'unité de commande (5), mais en particulier l'unité de commande (5) déterminant actuellement plusieurs paramètres de roulement déterminés, au moins la vitesse (v) actuelle du véhicule (3) étant déterminée et/ou calculée comme premier paramètre de roulement déterminé lorsque le conducteur a actionné le dispositif (6) d'activation du bloqueur de stationnement (1), mais le bloqueur de stationnement (1) n'étant engagé efficacement dans ou sur la transmission (2) que lorsque le véhicule (3) est à l'arrêt ou que la vitesse de roulement (v) actuelle est sensiblement nulle, en outre la pente (s) actuelle de la route et/ou l'inclinaison longitudinale du véhicule étant déterminées et/ou calculées comme deuxième paramètre de roulement et, dans le cas où la vitesse du véhicule (v) est sensiblement nulle ou dans le cas où le véhicule (3) est à l'arrêt et que la valeur du deuxième paramètre de roulement dépasse une première valeur limite d'inclinaison déterminée (SG₁), le frein de stationnement (4) étant alors automatiquement activé, si le véhicule (3) n'est pas encore à l'arrêt et si la vitesse de véhicule (v) actuelle dépasse une valeur limite de vitesse du véhicule déterminée, l'engagement efficace du bloqueur de stationnement (1) dans ou sur la transmission (2) est empêché, si le véhicule (3) n'est pas encore à l'arrêt et si la vitesse de véhicule (v) actuelle devient inférieure à la valeur limite de vitesse du véhicule déterminée, le véhicule (3) n'étant freiné qu'à l'aide du frein de stationnement (4) activé automatiquement jusqu'à ce que sa vitesse de roulement (v) devienne sensiblement nulle, et le bloqueur de stationnement (1) étant alors engagé efficacement dans ou sur la transmission (2), une décision étant ensuite prise et/ou vérifiée sur la base de la valeur d'inclinaison déterminée (Sₓ) et/ou de la valeur d'inclinaison longitudinale déterminée du véhicule (3) par rapport à une deuxième valeur limite d'inclinaison déterminée (SG₂) pour savoir si le frein de stationnement (4) déjà activé peut être à nouveau désactivé par le conducteur.

2. Procédé selon la revendication 1, **caractérisé en ce que**, dans le cas où le véhicule est à l'arrêt et où le bloqueur de stationnement (1) est engagé efficacement et où la valeur de pente et/ou d'inclinaison (Sₓ) déterminée est la deuxième valeur limite d'inclinaison déterminée (SG₂) ou correspond à cette valeur, le desserrage et/ou la désactivation du frein de stationnement (4) par le conducteur est autorisé(e) et/ou rendu(e) possible à tout moment.

3. Procédé selon la revendication 1 ou 2, **caractérisé en ce que**, dans le cas où le véhicule (3) est à l'arrêt et où le bloqueur de stationnement (1) est engagé efficacement et où la valeur de pente et/ou d'inclinaison déterminée (Sₓ) dépasse la deuxième valeur limite d'inclinaison déterminée (SG2), le desserrage et/ou la désactivation du frein de stationnement (4) par le conducteur n'est pas autorisé(e) automatiquement et/ou est empêché(e) automatiquement au moins aussi longtemps que le bloqueur de stationnement (1) est engagé efficacement.

4. Procédé selon la revendication 3, **caractérisé en ce que** le frein de stationnement (4) ne peut être désactivé par le conducteur que lorsque le bloqueur de stationnement (1) dans ou sur la transmission (2) est désengagé efficacement.

5. Procédé selon la revendication 2, **caractérisé en ce que**, lorsque le frein de stationnement (4) est désactivé par le conducteur, le bloqueur de stationnement (1) est également désengagé automatiquement, en particulier peu avant cependant au moins en même temps.

6. Procédé selon l'une des revendications 1 à 5, **caractérisé en ce qu'**un bloqueur de stationnement (1) engagé efficacement est désengagé automatiquement lorsque le conducteur actionne la pédale d'accélérateur à un niveau de rapport engagé efficacement en force dans la transmission (2).

7. Procédé selon l'une des revendications précédentes, **caractérisé en ce que** la valeur limite de vitesse de véhicule déterminée correspondante est de 3 km/h.

8. Procédé selon l'une des revendications précédentes, **caractérisé en ce que** la première valeur limite de pente et/ou d'inclinaison déterminée (SG₁) correspond à une pente de route de 5 % ou à une déclivité de route correspondante et/ou la deuxième valeur limite de pente et/ou d'inclinaison déterminée (SG₂) correspond à une pente de route de 15 % ou à une déclivité de route correspondante.

9. Procédé selon l'une des revendications précédentes, **caractérisé en ce que**, lorsque le bloqueur de stationnement (1) est désactivé, en particulier lorsque le bouton de bloqueur de stationnement (6a) est actionné en conséquence, en particulier lorsque le bloqueur de stationnement (1) est désengagé efficacement, un frein de stationnement (4) activé est alors automatiquement désactivé également en même temps.
